# EUROPEAN PATENT APPLICATION

(11) **EP 4 422 334 A1**
(43) Date of publication of application: **28.08.2024**
(21) Application number: 22882521.2
(22) Date of filing: 16.09.2022
(51) Int. Cl.: H04W 76/11

(54) **REMOTE TERMINAL INFORMATION SENDING/RECEIVING METHOD AND DEVICE**

(30) Priority: 21.10.2021 CN 202111228150
(71) Applicant: Datang Mobile Communications Equipment Co., Ltd., Beijing 100085 (CN)
(72) Inventor: ZHANG, Huiying, Beijing 100085 (CN)
(74) Representative: Maiwald GmbH
(86) International application number: PCT/CN2022/119283
(87) International publication number: WO 2023/065910

(57) **Abstract**

Disclosed are a method for sending remote UE information, a method for receiving remote UE information, and a device. The method for sending remote UE information includes: sending, by a first relay UE, remote UE information to a base station, wherein the remote UE accesses the base station through the first relay UE, and the remote UE information includes a Uu interface identifier and/or a PC5 interface identifier of the remote UE.

## Description

### CROSS-REFERENCE TO RELATED APPLICATION

The present application claims a priority to the Chinese patent application No. 202111228150.4 filed in China on October 21, 2021, a disclosure of which is incorporated herein by reference in its entirety.

### TECHNICAL FIELD

The present disclosure relates to the field of mobile communication technology, and specifically to a method for sending remote user equipment (UE) information, a method for receiving remote UE information, and a device.

### BACKGROUND

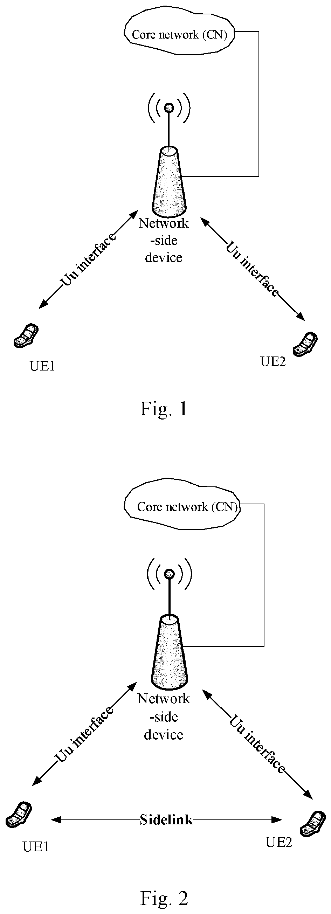

As shown in Fig. 1, the cellular network communication method is used for traditional wireless communication, that is, the UE and the network-side device perform transmission of uplink and downlink data/control information through a user to network interface universal (Uu) interface. The Uu interface is also called the user network interface or air interface.

As shown in Fig. 2, sidelink refers to a way of data transmission in which adjacent UEs can perform data transmission over a short range through a sidelink (also called sidelink or PC5). The wireless interface corresponding to the sidelink is called the direct communication interface (also called sidelink interface or PC5 interface).

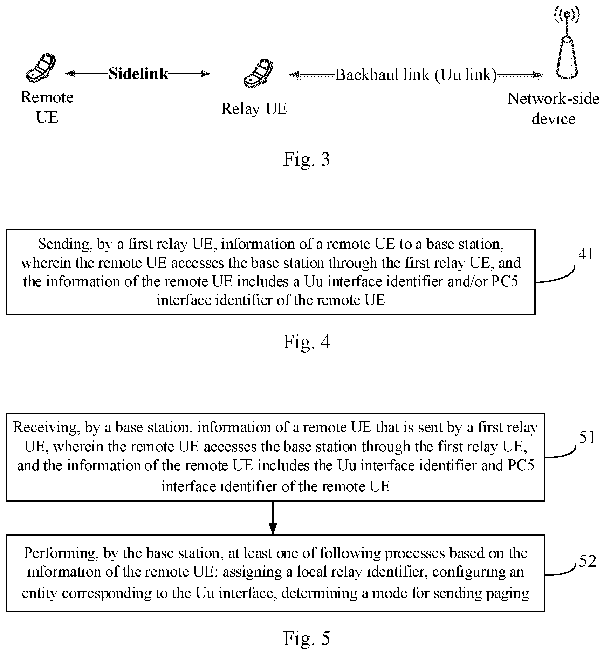

In order to expand network coverage, it is considered to introduce the terminal-to-network relay (UE-to-network relay). In the above relay method, the relay node may be a UE with relay function. As shown in Fig. 3, for UE-to-network relay, the Uu interface is used between the relay and the network, and the PC5 interface is used between the relay and the relayed terminal (user equipment, UE) (referred to as remote UE in this disclosure). The link between the relay UE and the network may be called a backhaul link for the remote UE.

In the scenario shown in Fig. 3, the remote UE may need a relay UE's assistance in receiving paging sent from the network to the remote UE, which may affect the data sending and receiving of the relay UE in the radio resource control (RRC) connected state. In addition, when the relay UE transmits the initial Uu signaling of the remote UE, the relay UE does not carry, in the signaling, the local relay identifier assigned by the base station that can identify the remote UE.

### SUMMARY

The present disclosure provides in some embodiments a remote UE information sending method, a remote UE information receiving method and a device, which realizes notifying the base station of the information of the remote UE connected to the relay UE, and can assist the base station to assign a local relay identifier for the remote UE or determine the mode for paging the remote UE based on the information of the remote UE.

According to one aspect of the present disclosure, at least one embodiment provides a method for sending remote UE information, including:
sending, by a first relay UE, information of a remote UE to a base station, wherein the remote UE accesses the base station through the first relay UE, and the information of the remote UE includes a user to network (Uu) interface identifier and/or a sidelink (PC5) interface identifier of the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, before the sending the information of the remote UE to the base station, the method further includes:
receiving, by the first relay UE, the information of the remote UE through a sidelink between the first relay UE and the remote UE.

In addition, according to at least one embodiment of the present disclosure, the information of the remote UE is sent by the remote UE after a sidelink between the remote UE and the first relay UE is established.

In addition, according to at least one embodiment of the present disclosure, the first relay UE sends the information of the remote UE to the base station when a precondition is met, wherein the precondition includes at least one of the following :
a first precondition: the remote UE is in an RRC idle state or inactive state, the first relay UE is in an RRC connected state, and the first relay UE is not configured with the common control resource set CORESET and/or common search space;
a second precondition: the first relay UE receives an initial Uu RRC message sent by the remote UE via the sidelink;
a third precondition: the first relay UE detects that a sidelink between the first relay UE and the remote UE is interrupted.

In addition, according to at least one embodiment of the present disclosure, in case that the second precondition is met, the first relay UE buffers the initial Uu RRC message, and after the first relay UE sends the information of the remote UE to the base station, the method further includes:
receiving and saving, by the first relay UE, a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station;
   and/or,
receiving, by the first relay UE, Uu interface configuration information of the remote UE that is sent by the base station, and performing, by the first relay UE, configuration of the Uu interface according to the Uu interface configuration information of the remote UE, wherein the Uu interface configuration information includes configuration information of an SRB and/or a DRB.

In addition, according to at least one embodiment of the present disclosure, the performing configuration of the Uu interface includes:
configuring an entity corresponding to the Uu interface for the remote UE in at least one of a local adaptation layer, a local RLC layer and a local MAC layer.

In addition, according to at least one embodiment of the present disclosure, the method further includes:
adding, by the first relay UE, the local relay identifier corresponding to the remote UE to an adaptation layer header of the initial Uu RRC message and sending, by the first relay UE, the initial Uu RRC message to the base station.

In addition, according to at least one embodiment of the present disclosure, the method further includes:
receiving, by the first relay UE, a first Uu RRC message sent by the base station, determining, by the first relay UE, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier, and sending, by the first relay UE, the first Uu RRC message to the first remote UE.

In addition, according to at least one embodiment of the present disclosure, the method further includes:
in case that the first relay UE detects that a sidelink between the first relay UE and the remote UE is interrupted, sending, by the first relay UE, an indication message to the base station that indicates the wireless link between the remote UE and the first relay UE is interrupted.

According to another aspect of the present disclosure, at least one embodiment provides a method for receiving remote UE information, including:
receiving, by a base station, information of a remote UE that is sent by a first relay UE, wherein the remote UE accesses the base station through the first relay UE, and the information of the remote UE includes a Uu interface identifier and a PC5 interface identifier of the remote UE; and
performing, by the base station, at least one of following processes based on the information of the remote UE:
   assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
   configuring an entity corresponding to the Uu interface of the remote UE, and sending Uu interface configuration information of the remote UE to the first relay UE, wherein the Uu interface configuration information includes configuration information of an SRB and/or a DRB;
   determining a mode for sending paging to the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, the method further includes:
receiving, by the base station, a second Uu RRC message of the remote UE that is sent by the first relay UE, determining, by the base station, according to a second local relay identifier carried in an adaptation layer header of the second Uu RRC message and the first correspondence relationship that is locally saved, a Uu interface identifier of a second remote UE corresponding to the second local relay identifier, and processing, by the base station, the second Uu RRC message based on the Uu interface identifier of the second remote UE;
   and/or,
when the base station sends a third Uu RRC message of a third remote UE to the first relay UE, determining, by the base station, a local relay identifier corresponding to the third remote UE according to the first correspondence relationship that is locally saved, adding, by the base station, the local relay identifier corresponding to the third remote UE to an adaptation layer header of the third Uu RRC message, and then sending, by the base station, the third Uu RRC message to the first relay UE.

In addition, according to at least one embodiment of the present disclosure, the mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

In addition, according to at least one embodiment of the present disclosure, the determining the mode for sending paging to the remote UE includes at least one of the following:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the first and second sending modes are used simultaneously;
in case that the common CORESET and/or the common search space is configured on the activated BWP of the first relay UE, determining that the mode for sending paging to the remote UE is the first sending mode.

In addition, according to at least one embodiment of the present disclosure, the method further includes:
receiving, by the base station, indication information sent by the first relay UE for indicating that a wireless link between a fourth remote UE and the first relay UE is interrupted;
according to the indication information, releasing, by the base station, relevant configuration of the fourth remote UE, deleting, by the base station, a local relay identifier assigned to the fourth remote UE, deleting, by the base station, a second correspondence relationship between a Uu interface identifier of the fourth remote UE and the local relay identifier, and determining, by the base station, a mode for sending paging to the fourth remote UE based on received information of the fourth remote UE reported by each relay UE.

According to another aspect of the present disclosure, at least one embodiment provides an apparatus for sending remote UE information, applied to a first relay UE, including a memory, a transceiver and a processor, wherein,
the memory is configured to store a computer program;
the transceiver is configured to send and receive data under the control of the processor;
the processor is configured to read the computer program in the memory and perform the following operations:
   sending information of a remote UE to a base station, wherein the remote UE accesses the base station through the first relay UE, and the information of the remote UE includes a Uu interface identifier and a PC5 interface identifier of the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, the processor is also configured to read the computer program in the memory and perform the following operations:
before sending the information of the remote UE to the base station, receiving the information of the remote UE through a sidelink between the first relay UE and the remote UE.

In addition, according to at least one embodiment of the present disclosure, the information of the remote UE is sent by the remote UE after a sidelink between the remote UE and the first relay UE is established.

In addition, according to at least one embodiment of the present disclosure, the processor is also configured to read the computer program in the memory and perform the following operations:
sending the information of the remote UE to the base station when a precondition is met, wherein the precondition includes at least one of the following:
a first precondition: the remote UE is in an RRC idle state or inactive state, the first relay UE is in an RRC connected state, and the first relay UE is not configured with a common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

In addition, according to at least one embodiment of the present disclosure, the processor is also configured to read the computer program in the memory and perform the following operations:
in case that the second precondition is met, buffering the initial Uu RRC message, and after the sending the information of the remote UE to the base station:
receiving and saving a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station;
   and/or,
receiving Uu interface configuration information of the remote UE that is sent by the base station, and performing configuration of the Uu interface according to the Uu interface configuration information of the remote UE, wherein the Uu interface configuration information includes configuration information of an SRB and/or a DRB.

In addition, according to at least one embodiment of the present disclosure, the performing configuration of the Uu interface includes:
configuring an entity corresponding to the Uu interface for the remote UE in at least one of a local adaptation layer, a local RLC layer and a local MAC layer.

In addition, according to at least one embodiment of the present disclosure, the processor is also configured to read the computer program in the memory and perform the following operations:
adding the local relay identifier corresponding to the remote UE to an adaptation layer header of the initial Uu RRC message and sending the initial Uu RRC message to the base station.

In addition, according to at least one embodiment of the present disclosure, the processor is also configured to read the computer program in the memory and perform the following operations:
receiving a first Uu RRC message sent by the base station to the remote UE; determining, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and sending the first Uu RRC message to the first remote UE.

In addition, according to at least one embodiment of the present disclosure, the processor is also configured to read the computer program in the memory and perform the following operations:
in case that it is detected that a sidelink between the first relay UE and the remote UE is interrupted, sending an indication message to the base station that indicates the wireless link between the remote UE and the first relay UE is interrupted.

According to another aspect of the present disclosure, at least one embodiment provides a first relay UE, including:
a sending unit, configured to send information of a remote UE to a base station, wherein the remote UE accesses the base station through the first relay UE, and the information of the remote UE includes a Uu interface identifier and/or a PC5 interface identifier of the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, the first relay UE further includes:
a first receiving unit, configured to receive the information of the remote UE through a sidelink between the first relay UE and the remote UE before sending the information of the remote UE to the base station.

In addition, according to at least one embodiment of the present disclosure, the information of the remote UE is sent by the remote UE after a sidelink between the remote UE and the first relay UE is established.

In addition, according to at least one embodiment of the present disclosure, the first relay UE sends the information of the remote UE to the base station when a precondition is met, wherein the precondition includes at least one of the following :
a first precondition: the remote UE is in an RRC idle state or inactive state, the first relay UE is in an RRC connected state, and the first relay UE is not configured with the common control resource set CORESET and/or common search space;
a second precondition: the first relay UE receives an initial Uu RRC message sent by the remote UE via the sidelink;
a third precondition: the first relay UE detects that a sidelink between the first relay UE and the remote UE is interrupted.

In addition, according to at least one embodiment of the present disclosure, the first relay UE further includes:
a buffer unit, configured to buffer the initial Uu RRC message in case that the second precondition is met;
a second receiving unit, configured to receive and save a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station; and/or, to receive Uu interface configuration information of the remote UE that is sent by the base station, and perform configuration of the Uu interface according to the Uu interface configuration information of the remote UE, wherein the Uu interface configuration information includes configuration information of an SRB and/or a DRB.

In addition, according to at least one embodiment of the present disclosure, the second receiving unit is further configured to configure an entity corresponding to the Uu interface for the remote UE in at least one of a local adaptation layer, a local RLC layer and a local MAC layer.

In addition, according to at least one embodiment of the present disclosure, the first relay UE further includes:
a sending processing unit, configured to add the local relay identifier corresponding to the remote UE to an adaptation layer header of the initial Uu RRC message and send the initial Uu RRC message to the base station.

In addition, according to at least one embodiment of the present disclosure, the first relay UE further includes:
a receiving processing unit, configured to receive a first Uu RRC message sent by the base station; determine, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and send the first Uu RRC message to the first remote UE.

In addition, according to at least one embodiment of the present disclosure, the first relay UE further includes:
a link interruption processing unit, configured to, in case that it is detected that a sidelink between the first relay UE and the remote UE is interrupted, send an indication message to the base station that indicates the wireless link between the remote UE and the first relay UE is interrupted.

According to another aspect of the present disclosure, at least one embodiment provides an apparatus for receiving remote UE information, which is applied to a base station and includes a memory, a transceiver and a processor, wherein,
the memory is configured to store a computer program;
the transceiver is configured to send and receive data under the control of the processor;
the processor is configured to read the computer program in the memory and perform the following operations:
   receiving information of a remote UE that is sent by a first relay UE, wherein the remote UE accesses the base station through the first relay UE, and the information of the remote UE includes a Uu interface identifier and a PC5 interface identifier of the remote UE; and
   performing at least one of following processes based on the information of the remote UE:
      assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
      configuring an entity corresponding to the Uu interface of the remote UE, and sending Uu interface configuration information of the remote UE to the first relay UE, wherein the Uu interface configuration information includes configuration information of an SRB and/or a DRB;
      determining a mode for sending paging to the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, the processor is also configured to read the computer program in the memory and perform the following operations:
receiving a second Uu RRC message of the remote UE that is sent by the first relay UE, determining, according to a second local relay identifier carried in an adaptation layer header of the second Uu RRC message and the first correspondence relationship that is locally saved, a Uu interface identifier of a second remote UE corresponding to the second local relay identifier, and processing the second Uu RRC message based on the Uu interface identifier of the second remote UE,
   and/or,
when sending a third Uu RRC message of a third remote UE to the first relay UE, determining a local relay identifier corresponding to the third remote UE according to the first correspondence relationship that is locally saved, adding the local relay identifier corresponding to the third remote UE to an adaptation layer header of the third Uu RRC message, and then sending the third Uu RRC message to the first relay UE.

In addition, according to at least one embodiment of the present disclosure, the mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE;
a third sending mode: using the first sending mode and the second sending mode simultaneously.

In addition, according to at least one embodiment of the present disclosure, the determining the mode for sending paging to the remote UE includes at least one of the following:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the third sending mode;
in case that the common CORESET and/or the common search space is configured on the activated BWP of the first relay UE, determining that the mode for sending paging to the remote UE is the first sending mode.

In addition, according to at least one embodiment of the present disclosure, the processor is also configured to read the computer program in the memory and perform the following operations:
receiving indication information sent by the first relay UE for indicating that a wireless link between a fourth remote UE and the first relay UE is interrupted;
according to the indication information, releasing relevant configuration of the fourth remote UE, deleting a local relay identifier assigned to the fourth remote UE, deleting a second correspondence relationship between a Uu interface identifier of the fourth remote UE and the local relay identifier, and determining a mode for sending paging to the fourth remote UE based on received information of the fourth remote UE reported by each relay UE.

According to another aspect of the present disclosure, at least one embodiment provides a base station including:
a receiving unit, configured to receive information of a remote UE that is sent by a first relay UE, wherein the remote UE accesses the base station through the first relay UE, and the information of the remote UE includes a Uu interface identifier and a PC5 interface identifier of the remote UE;
a processing unit, configured to perform at least one of the following processes according to the information of the remote UE:
   assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
   configuring an entity corresponding to the Uu interface of the remote UE, and sending Uu interface configuration information of the remote UE to the first relay UE, wherein the Uu interface configuration information includes configuration information of an SRB and/or a DRB;
   determining a mode for sending paging to the remote UE.

In addition, according to at least one embodiment of the present disclosure, the information of the remote UE further includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

In addition, according to at least one embodiment of the present disclosure, the base station further includes:
an interactive processing unit, configured to:
receive a second Uu RRC message of the remote UE that is sent by the first relay UE, determine, according to a second local relay identifier carried in an adaptation layer header of the second Uu RRC message and the first correspondence relationship that is locally saved, a Uu interface identifier of a second remote UE corresponding to the second local relay identifier, and process the second Uu RRC message based on the Uu interface identifier of the second remote UE;
   and/or,
when sending a third Uu RRC message of a third remote UE to the first relay UE, determine a local relay identifier corresponding to the third remote UE according to the first correspondence relationship that is locally saved, add the local relay identifier corresponding to the third remote UE to an adaptation layer header of the third Uu RRC message, and then send the third Uu RRC message to the first relay UE.

In addition, according to at least one embodiment of the present disclosure, the mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

In addition, according to at least one embodiment of the present disclosure, the processing unit is further configured to determine the mode for sending paging to the remote UE in at least one of the following ways:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the first and second sending modes are used simultaneously;
in case that the common CORESET and/or the common search space is configured on the activated BWP of the first relay UE, determining that the mode for sending paging to the remote UE is the first sending mode.

In addition, according to at least one embodiment of the present disclosure, the base station further includes:
a link interruption processing unit, configured to receive indication information sent by the first relay UE for indicating that a wireless link between a fourth remote UE and the first relay UE is interrupted; according to the indication information, release relevant configuration of the fourth remote UE, delete a local relay identifier assigned to the fourth remote UE, delete a second correspondence relationship between a Uu interface identifier of the fourth remote UE and the local relay identifier, and determine a mode for sending paging to the fourth remote UE based on received information of the fourth remote UE reported by each relay UE.

According to another aspect of the present disclosure, at least one embodiment provides a processor-readable storage medium storing a computer program, the computer program being configured to cause a processor to perform the foregoing methods.

According to another aspect of the present disclosure, at least one embodiment provides a chip. The chip includes a processor and a communication interface. The communication interface is coupled to the processor. The processor is configured to run programs or instructions to implement the methods as described above.

According to another aspect of the present disclosure, at least one embodiment provides a computer program product, the computer program product is stored in a non-volatile storage medium, and the computer program product is executed by at least one processor to implement the methods as described above.

Compared with related technologies, the remote UE information sending method, receiving method and device provided by the embodiments of the present disclosure can notify the base station of information of a remote UE connected to the relay UE, and can assist the base station to assign a local relay identifier for the remote UE based on the information, to avoid the problem that the relay UE does not have the local relay identifier of the remote UE and does not establish Uu SRB layer entities corresponding to the remote UE when transmitting the initial signaling of the remote UE. In addition, the above information can also be used by the base station to determine the mode for paging the remote UE, thereby avoiding data transmission and reception problems caused by the relay UE monitoring the paging occasion (PO) of the remote UE.

### BRIEF DESCRIPTION OF THE DRAWINGS

Various other advantages and benefits will become apparent to those of ordinary skill in the art upon reading the following detailed description of the preferred embodiments. The drawings are for the purpose of illustrating preferred embodiments only and are not to be considered limiting on the disclosure. Also throughout the drawings, the same reference characters are used to designate the same components. In the attached drawings:
Fig. 1 is a schematic diagram of a communication method of network centralized control in a conventional LTE system;
Fig. 2 is a schematic diagram of D2D discovery/communication in related technologies;
Fig. 3 is a schematic diagram of UE-to-network relay in related technologies;
Fig. 4 is a schematic flowchart of a method for sending remote UE information according to an embodiment of the present disclosure;
Fig. 5 is another schematic flowchart of a method for receiving remote UE information according to an embodiment of the present disclosure;
Fig. 6 is an interaction flow chart of a base station and a relay UE in Example 1 according to an embodiment of the present disclosure;
Fig. 7 is an interaction flow chart of a base station and a relay UE in Example 2 according to an embodiment of the present disclosure;
Fig. 8 is an interaction flow chart of a base station and a relay UE in Example 3 according to an embodiment of the present disclosure;
Fig. 9 is an interaction flow chart of a base station and a relay UE in Example 4 according to an embodiment of the present disclosure;
Fig. 10 is an interaction flow chart of a base station and a relay UE in Example 5 according to an embodiment of the present disclosure;
Fig. 11 is a schematic structural diagram of a UE according to an embodiment of the present disclosure;
Fig. 12 is a schematic structural diagram of an apparatus for sending remote UE information according to an embodiment of the present disclosure;
Fig. 13 is a schematic structural diagram of a base station according to an embodiment of the present disclosure;
Fig. 14 is a schematic structural diagram of an apparatus for receiving remote UE information according to an embodiment of the present disclosure.

### DETAILED DESCRIPTION

Exemplary embodiments of the present disclosure will be described in more detail below with reference to the accompanying drawings. Although exemplary embodiments of the present disclosure are shown in the drawings, it should be understood that the present disclosure may be implemented in various forms and should not be limited to the embodiments set forth herein. Rather, these embodiments are provided to provide a thorough understanding of the disclosure, and to fully convey the scope of the disclosure to those skilled in the art.

The terms "first", "second", etc. in the description and claims of this application are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions. For example, a process, method, system, product or equipment including a series of steps or units is not limited to those steps or units which are clearly listed, but may include other steps or units which are not clearly listed or intrinsic to the process, the method, the product or the equipment. The use of "and/or" in the description and claims represents at least one of the connected objects.

The following description provides examples and does not limit the scope, applicability, or configurations set forth in the claims. Changes may be made in the function and arrangement of the elements discussed without departing from the spirit and scope of the disclosure. Various examples may omit, substitute, or add various procedures or components as appropriate. For example, the described methods may be performed in an order different from that described, and various steps may be added, omitted, or combined. Additionally, features described with reference to certain examples may be combined in other examples.

In this article, the network-side device may specifically be a base station. The base station may be a base station of the fifth generation mobile communication technology (5G) and later versions, e.g., the next generation base station (the next Generation Node B, gNB), 5G (New Radio, NR) narrowband (NB), etc., or the base station can also be a base station in other communication systems, e.g., evolved node B (eNB), wireless local area network (WLAN) access point, or other access point, etc. In addition, the base station may also be called a Node B, an evolved Node B, an access point, a base transceiver station (BTS), a radio base station, a radio transceiver, a basic service set (BSS), an extended service set (ESS), a B node, an evolved B node (eNB), a home B node, a home evolved B node, a WLAN access point, a wireless fidelity (WiFi) node or some other appropriate terminology in the art. As long as the same technical effect is achieved, the base station is not limited to specific technical terms. In addition, base station is also used to refer to network-side device hereinafter.

As mentioned in the background section, in order to expand network coverage, related technologies introduce a UE-to-network (UE-to-network relay) relay solution as shown in Fig. 3. The remote UE can be in RRC idle, RRC inactive or RRC connected state. The relay UE can also be in RRC idle, RRC inactive or RRC connected state. However, when the remote UE is in the RRC connected state, the relay UE must also be in the RRC connected state. For a remote UE in RRC idle or RRC inactive state, the relay UE needs to assist in receiving the network's paging for the remote UE. If the relay UE is in the RRC connected state at this time, if the bandwidth part (BWP) of the relay UE is not configured with a common control resource set (CORESET) or common search space, it is necessary to perform BWP switching and switch to a BWP configured with the common CORESET and common search space, to receive paging for the remote UE, which may affect the data sending and receiving of the relay UE.

The relay UE can relay signaling and data for multiple remote UEs at the same time. On the Uu interface, the relay UE needs to distinguish which remote UE each packet comes from or is sent to. Therefore, it is necessary to assign one local U2N relay identifier to each remote UE, so that the relay UE and the base station can identify a remote UE on the Uu interface. The local U2N relay identifier is assigned by the base station, but if the base station assigns the local U2N relay identifier to the remote UE after receiving the first uplink Uu RRC message from the remote UE, the relay UE cannot use the assigned local U2N relay identifier in sending the first Uu RRC message of the remote UE to the base station. Moreover, when the relay UE sends the first Uu RRC message of the remote UE, if Uu entities of various layers (including but not limited to entities in the adaptation layer, radio link control (RLC) layer, media access control (MAC) layer) are not established for the remote UE, the relay UE can only send the initial Uu signaling of the remote UE through a common channel using a fixed configuration, which makes it difficult to guarantee transmission reliability and latency.

In order to solve at least one of the above problems, embodiments of the present disclosure provide a method for sending remote UE information and a method for receiving remote UE information. The relay UE reports, through dedicated signaling, to the network the information of the remote UE (remote UE) connected thereto. Based on the information, the network assigns a local relay identifier (also called a local U2N relay identifier herein) to the remote UE, configures a signaling radio bearer (SRB) and/or data radio bearer (DRB) of the remote UE and notifies the relay UE, or determines the mode for sending paging to the remote UE.

Referring to Fig. 4, a method for sending remote UE information according to an embodiment of the present disclosure, when applied to the relay UE side, includes:
step 41: sending, by a first relay UE, information of a remote UE to a base station, wherein the remote UE accesses the base station through the first relay UE, and the information of the remote UE includes a Uu interface identifier and/or PC5 interface identifier of the remote UE.

Here, the first relay UE may send, to the base station, information of one or more remote UEs connected to the first relay UE. The Uu interface identifier information of the remote UE may specifically be 5G S-temporary mobile subscription identifier (5G-S-TMSI), inactive RNTI (I-RNTI) or cell radio network temporary identifier (C-RNTI) of the remote UE, etc. The PC5 interface identifier of the remote UE may specifically be Layer-2 ID of the remote UE. The remote UE may be directly connected to the first relay UE, or may be connected to the first relay UE through other relay UEs. The first relay UE may be a relay UE directly connected to the base station.

Through the above steps, the relay UE in the embodiments of the present disclosure reports to the base station the information of the remote UE connected thereto, so that based on the information, the base station can assign a local relay identifier to the remote UE or determine the mode for sending paging to the remote UE, which can avoid the problem that the relay UE does not have the local relay identifier of the remote UE and does not establish Uu SRB layer entities corresponding to the remote UE when transmitting the initial signaling of the remote UE, and avoids data transmission and reception problems caused by the relay UE monitoring the PO of the remote UE.

In this embodiment of the present disclosure, the remote UE information may also include at least one of following information:
1) the RRC state of the remote UE, such as RRC idle state, RRC connected state, RRC inactive state;
2) paging reception requirement information of the remote UE, wherein the paging reception requirement information is used for indicating whether a relay UE is required to forward paging;
3) whether the first relay UE receives the Uu RRC message from the remote UE, the Uu RRC message including RRCSetupRequest, RRCResumeRequest, RRCReestablishmentRequest or RRCReconfigurationComplete message, etc.;
4) a connection status of a sidelink of the remote UE, that is, whether there is a relay connection between the relay UE and the remote UE, such as the connection is normal or the connection is interrupted.

Specifically, the information of the remote UE may be transmitted by the remote UE after a sidelink is established between the remote UE and the first relay UE. For example, after a sidelink (SL) unicast connection is established between the remote UE and the first relay UE, the remote UE transmits the information of the remote UE to the relay UE connected thereto through PC5-S signaling, PC5-RRC signaling or SL media access control control element (MAC CE). Before the above step 41, the first relay UE may receive the information of the remote UE through a sidelink between the remote UE and the first relay UE, and then, in step 41, the first relay UE sends the information to the base station.

More specifically, the first relay UE may decide whether to send the information to the base station based on whether a precondition is met. The precondition includes at least one of the following:
a first precondition: the remote UE is in RRC idle state or inactive state, the first relay UE is in RRC connected state, and the first relay UE is not configured with a common CORESET and/or a common search space;
a second precondition: the first relay UE receives an initial Uu RRC message sent by the remote UE via the sidelink, such as RRCSetupRequest, RRCResumeRequest, RRCReestablishmentRequest or RRCReconfigurationComplete message;
a third precondition: the first relay UE detects that a sidelink between the first relay UE and the remote UE is interrupted, that is, the SL unicast connection between the remote UE and the first relay UE is disconnected.

Taking the second precondition as an example, if the second precondition is met, the first relay UE may locally buffer the initial Uu RRC message sent by the remote UE, and send in step 41 the information of the remote UE to the base station. The base station can perform processing such as assigning a local relay identifier to the remote UE, according to the received remote UE information. In this way, subsequently, the first relay UE can also perform the following processing:
receiving and saving, by the first relay UE, a correspondence relationship, which is sent by the base station, between the PC5 interface identifier of the remote UE and the local relay identifier, where the local relay identifier is identification information assigned by the base station for identifying the remote UE on the Uu interface between the first relay UE and the base station;
   and/or,
receiving, by the first relay UE, Uu interface configuration information of the remote UE that is sent by the base station, and performing, by the first relay UE, configuration of the Uu interface according to the Uu interface configuration information of the remote UE, where the Uu interface configuration information includes configuration information of an SRB and/or a DRB.

Here, performing, by the first relay UE, configuration of the Uu interface may specifically include: configuring an entity corresponding to the Uu interface for the remote UE in at least one of the local adaptation layer, the local RLC layer, and the local MAC layer.

Through the above steps, the first relay UE can obtain the local relay identifier assigned by the base station to the remote UE for identifying the remote UE on the Uu interface between the first relay UE and the base station. The first relay UE can also determine the local relay identifier of the remote UE according to the PC5 interface identifier of the remote UE and the locally saved correspondence relationship, and add the local relay identifier corresponding to the remote UE to an adaptation layer header of the locally buffered initial Uu RRC message, and then send the initial Uu RRC message to the base station, thereby ensuring the reliability of Uu RRC message transmission.

After the first relay UE obtains the correspondence relationship between the PC5 interface identifier of the remote UE and the local relay identifier, the first relay UE can forward a message for the remote UE according to the correspondence relationship. For example, the first relay UE receives the first Uu RRC message sent by the base station, and according to the locally saved correspondence relationship between the PC5 interface identifier of the remote UE and the local relay identifier and the first local relay identifier carried in the adaptation layer header of a first Uu RRC message, determines the first remote UE corresponding to the first local relay identifier, and sends the first Uu RRC message to the first remote UE. For another example, the first relay UE receives a second Uu RRC message sent by the first remote UE via the sidelink, determines the first local relay identifier corresponding to the first remote UE according to the locally saved correspondence relationship between the PC5 interface identifier of the remote UE and the local relay identifier and the PC5 interface identifier of the first remote UE, and then adds the first local relay identifier to the adaptation layer header of the second Uu RRC message and sends the second Uu RRC message to the base station.

In embodiments of the present disclosure, the relay UE may also send update information to the base station according to the connection status of the remote UE. For example, in case that the first relay UE detects that a sidelink between the first relay UE and the remote UE is interrupted, the first relay UE sends indication information for indicating that the wireless link between the remote UE and the first relay UE is interrupted to the base station. The base station may delete the configuration related to the remote UE according to the indication information.

In addition, it should be noted that the present disclosure is applicable to a multi-hop relay scenario, that is, a scenario in which a remote UE accesses the network through the relay of multiple relay UEs. For a multi-hop relay scenario, the information of the remote UE reported by the relay UE may include the information of the relay UE of each hop.

Referring to Fig. 5, a method for receiving remote UE information according to an embodiment of the present disclosure, when applied to the base station side, includes following steps 51 and 52.

Step 51: receiving, by a base station, information of a remote UE that is sent by a first relay UE, wherein the remote UE accesses the base station through the first relay UE, and the information of the remote UE includes the Uu interface identifier and PC5 interface identifier of the remote UE.

Here, the first relay UE may be a relay UE directly connected to the base station.

Step 52: performing, by the base station, at least one of following processes based on the information of the remote UE:
1) assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
2) configuring an entity corresponding to the Uu interface of the remote UE, and sending Uu interface configuration information of the remote UE to the first relay UE, wherein the Uu interface configuration information includes configuration information of an SRB and/or a DRB; here, configuring the entity corresponding to the Uu interface of the remote UE includes configuring the entity corresponding to the Uu interface in at least one of service data adaption protocol (SDAP), packet data convergence protocol (PDCP), adaptation layer, radio link control (RLC) and MAC layer;
3) determining a mode for sending paging to the remote UE.

The mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

It can be seen that in the embodiment of the present disclosure, the information of the remote UE sent by the first relay UE is used for causing the base station to perform at least one of the above processes based on the information of the remote UE.

Several examples of determining the mode for sending paging to the remote UE are provided below. It should be noted that the following example is only an example applicable to the present disclosure and is not intended to limit the present disclosure:
1) in case that the information of the remote UE indicates that a sidelink of the remote UE is interrupted and the information of the remote UE sent by a relay UE other than the first relay UE is not received, determining that the mode for sending paging to the remote UE is the first sending mode;
2) in case that a common CORESET and/or a common search space is not configured on an activated BWP of the first relay UE, determining that the mode for sending paging to the remote UE is the second sending mode or the first and second sending modes are used simultaneously;
3) in case that the common CORESET and/or the common search space is configured on the activated BWP of the first relay UE, determining that the mode for sending paging to the remote UE is the first sending mode.

Through the above steps, the base station can, according to the information of the remote UE sent by the relay UE, assign a local relay identifier to the remote UE, configure the signaling radio bearer (SRB) and/or data radio bearer (DRB) of the remote UE and notify the relay UE, or determine the mode for sending paging to the remote UE, thereby avoiding the problem that the relay UE does not have the local relay identifier of the remote UE and does not establish Uu SRB layer entities corresponding to the remote UE when transmitting the initial signaling of the remote UE, and avoiding data transmission and reception problems caused by the relay UE monitoring the PO of the remote UE.

In an embodiment of the present disclosure, the information of the remote UE also includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

After assigning the local relay identifier of the remote UE, the base station may send and receive data according to the first correspondence relationship maintained locally. For example, the base station receives the second Uu RRC message of the remote UE sent by the first relay UE, determines, according to a second local relay identifier carried in an adaptation layer header of the second Uu RRC message and the first correspondence relationship that is locally saved, a Uu interface identifier of a second remote UE corresponding to the second local relay identifier, and processes the second Uu RRC message based on the Uu interface identifier of the second remote UE; and/or, when the base station sends a third Uu RRC message of a third remote UE to the first relay UE, the base station determines a local relay identifier corresponding to the third remote UE according to the first correspondence relationship that is locally saved, adds the local relay identifier corresponding to the third remote UE to an adaptation layer header of the third Uu RRC message, and then sends the third Uu RRC message to the first relay UE.

In an embodiment of the present disclosure, the base station may further receive indication information sent by the first relay UE for indicating that the wireless link between the fourth remote UE and the first relay UE is interrupted. At this time, according to the indication information, the base station releases the relevant configuration of the fourth remote UE, deletes a local relay identifier assigned to the fourth remote UE, deletes the second correspondence relationship between the Uu interface identifier of the fourth remote UE and the local relay identifier, and determines a mode for sending paging to the fourth remote UE based on received information of the fourth remote UE reported by each relay UE.

As can be seen from the above, the embodiments of the present disclosure provide that in the relay scenario, the relay UE notifies the base station of the information of the remote UE connected to the relay UE, so that the base station can assign a local relay identifier (local U2N relay identifier) to the remote UE that is to enter the RRC connected state, to avoid the problem that initial signaling of the remote UE lacks the local U2N relay identifier, and configure the remote UE Uu SRB for the relay UE, thereby improving the signaling transmission reliability of the remote UE, or the base station can determine the mode for paging the remote UE, thereby avoiding data transmission and reception problems caused by the relay UE monitoring the PO of the remote UE.

The above methods in the embodiments of the present disclosure are described below with reference to several specific interaction examples.

### Example 1:

A remote UE1 accesses a base station 1 through a relay UE1. The remote UE1 initiates an RRC setup request. The base station assigns a local relay identifier (that is, the local U2N relay identifier) to the remote UE1 and sends the Uu SRB configuration of the remote UE1 to the relay UE1. The RRC connection of the remote UE1 is successfully established.

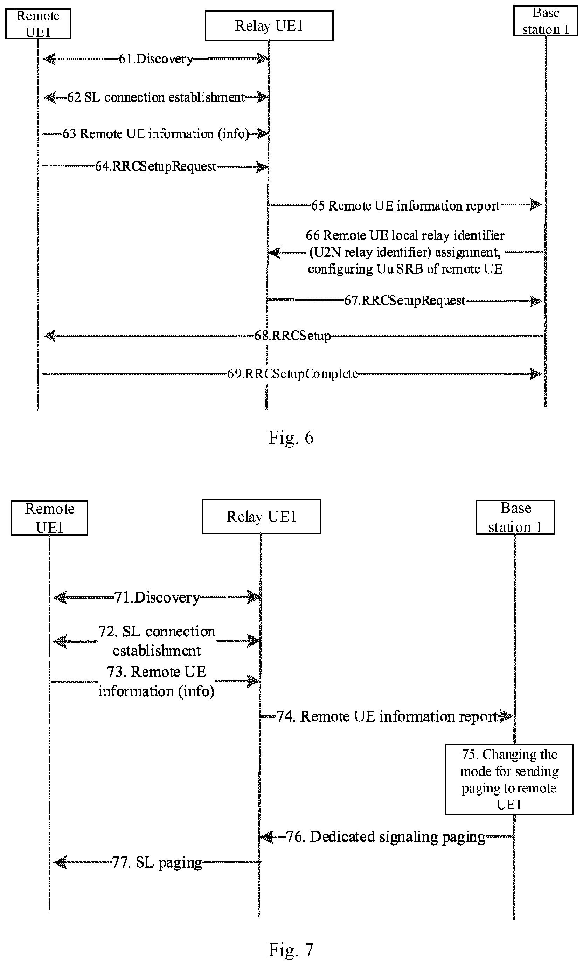

The relay UE1 initially in the RRC connected state camps on cell 1 controlled by the base station 1. As shown in Fig. 6, this example includes steps 61 to 69.

Step 61: the remote UE1 discovers and selects the relay UE1 as its U2N relay through a discovery process.

Step 62: the remote UE1 establishes an SL unicast connection with the relay UE1.

Step 63: the remote UE1 sends its own Uu interface identifier information (5G-S-TMSI of the remote UE), PC5 interface identifier information of the remote UE (Layer-2 ID of the remote UE), RRC state of the remote UE (RRC idle state), and paging reception requirement (the remote UE does not need a relay UE to forward paging) to the relay UE1.

Step 64: the remote UE1 sends an RRC setup request message to the base station 1 via the relay UE1.

Step 65: after receiving the RRC setup request message sent by the remote UE1 to the base station, the relay UE1 buffers the message and the message triggers the relay UE1 to initiate a remote UE information report. The remote UE information report includes: Uu interface identifier information of the remote UE1 (5G-S-TMSI of the remote UE1), PC5 interface identifier information of the remote UE1 (Layer-2 ID of the remote UE1), RRC state of the remote UE1 (RRC idle state), paging reception requirement (the remote UE1 does not need the relay UE1 to forward paging), the Uu RRC message of the remote UE1 is received, relay connection status (there is a relay connection between the relay UE1 and the remote UE1).

The remote UE information report can be sent through related RRC messages or through newly introduced RRC messages.

Step 66: after receiving the remote UE information report sent by the relay UE1, the base station 1 assigns a local U2N relay identifier 1 to the remote UE1, and sends the assigned local U2N relay identifier 1, a correspondence relationship between the local U2N relay identifier 1 and the remote UE1, and the Uu SRB configuration of the remote UE1 to the relay UE1 through signaling. The Uu SRB of the remote UE1 includes but is not limited to: SRB0, SRB1, SRB2 and SRB3 and a combination thereof. The Uu SRB configuration of the remote UE1 includes but is not limited to: SDAP configuration, PDCP configuration, adaptation layer configuration, RLC configuration, MAC configuration, logical channel configuration and physical layer configuration.

Step 67: after receiving the message of step 66, the relay UE1 establishes Uu layer entities (including but not limited to adaptation layer, RLC, and MAC entities) for the remote UE based on the configuration information, and sends the buffered RRC setup request message of the remote UE1 to the base station 1.

Step 68: the base station 1 sends an RRC setup message to the remote UE1 through the relay UE1.

Step 69: the remote UE1 sends an RRC setup completion message to the base station 1 through the relay UE1.

In the above steps 67-69, the relay UE1 performs remote UE channel mapping through the local U2N relay identifier.

Example 1 is also applicable to the scenario where the remote UE is in the RRC inactive state or the RRC connected state. At this time, the Uu interface identifier of the remote UE1 is I-RNTI or C-RNTI of the remote UE1, and the RRC message initiated by the remote UE1 is RRCResumeRequest message or RRCReestablishmentRequest message.

### Example 2:

The remote UE1 accesses the base station 1 through the relay UE1. The relay UE1 is in the connected state. The activated BWP of the relay UE1 is not configured with a common CORESET. Paging for the remote UE1 is forwarded by the relay UE1. As shown in Fig. 7, this example includes steps 71 to 77.

Steps 71 to 72 are the same as the steps 61 to 62 in Example 1.

Step 73: the remote UE1 sends its own Uu interface identifier information (5G-S-TMSI of the remote UE), the PC5 interface identifier information of the remote UE (Layer-2 ID of the remote UE), the RRC state of the remote UE (RRC idle), and the paging reception requirement (the remote UE needs the relay UE to forward paging) to the relay UE1.

Step 74: after the relay UE1 receives the information of the remote UE1, the information triggers the relay UE1 to initiate a remote UE information report. The remote UE information report contains the Uu interface identifier information of the remote UE1 (5G-S-TMSI of the remote UE1), PC5 interface identifier information of the remote UE1 (Layer-2 ID of the remote UE1), RRC state of the remote UE1 (RRC idle state), paging reception requirement (remote UE1 needs relay UE1 to forward paging), the Uu RRC message is not received from the remote UE1, the relay connection status (there is a relay connection between the relay UE1 and the remote UE1).

Step 75: after receiving the remote UE information report from the relay UE1, the base station knows that the relay UE1 needs to forward paging for the remote UE1, and the activated BWP of the relay UE1 is not configured with a common CORESET, the base station determines that the mode for sending paging to the remote UE1 is to send paging to the relay UE1 through dedicated signaling.

Step 76: the base station 1 sends the paging directed to the remote UE1 to the relay UE1 through dedicated signaling.

Step 77: the relay UE1 forwards the paging to the remote UE1 through SL signaling.

### Example 3:

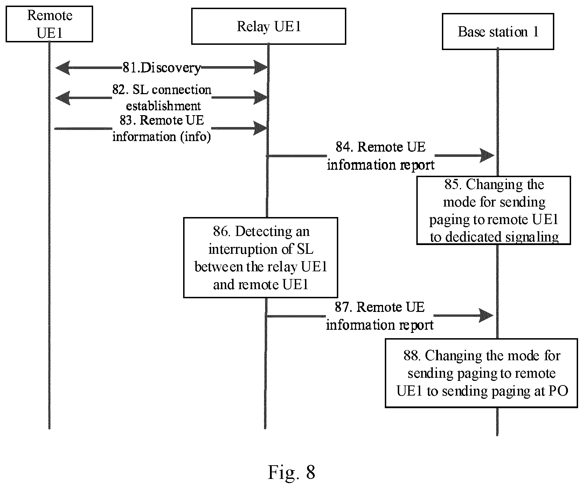

The remote UE1 accesses the base station 1 through the relay UE1. The relay UE1 is in the connected state. The activated BWP of the relay UE1 is not configured with a common CORESET. Paging for the remote UE1 is forwarded by the relay UE1. The SL link between the relay UE1 and the remote UE1 is interrupted. As shown in Fig. 8, this example includes steps 81 to 88.

Steps 81 to 85 are the same as the steps 71 to 75 of Example 2

Step 86: the relay UE1 detects that the SL connection between the relay UE1 and the remote UE1 is interrupted.

Step 87: the relay UE1 initiates a remote UE information report. The remote UE information report includes: the Uu interface identifier information of the remote UE1 (5G-S-TMSI of the remote UE1), the PC5 interface identifier information of the remote UE1 (Layer-2 ID of the remote UE1), RRC state of the remote UE1 (RRC idle state), paging reception requirement (the remote UE1 does not need the relay UE1 for paging forwarding), a Uu RRC message is not received from the remote UE1, relay status (there is no relay connection between the relay UE1 and the remote UE1).

Step 88: after receiving the remote UE information report sent by the relay UE1, the base station determines that the paging forwarding relationship between the remote UE1 and the relay UE1 no longer exists, and changes the mode for sending paging to the remote UE1 to the traditional mode, i.e., paging is sent through a paging channel at the paging occasion of the remote UE1.

Example 2 and Example 3 are also applicable to the remote UE in the RRC inactive state, and at this time, the Uu interface identifier information of the remote UE1 is the I-RNTI of the remote UE1.

### Example 4:

The remote UE1 accesses the base station 1 through 2-hop relay, i.e., the U2U relay UE1 and the U2N relay UE2. The remote UE1 initiates an RRC setup request. The base station assigns a local U2N relay identifier to the remote UE1. The RRC connection of the remote UE1 is successfully established.

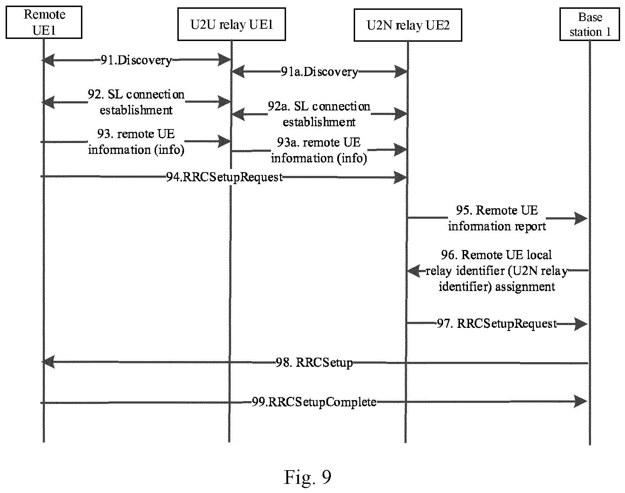

The U2N relay UE2, which is initially in the RRC connected state, camps on cell 1 controlled by base station 1. As shown in Fig. 9, the example includes steps 91 to 99.

Steps 91 and 91a: the remote UE1 discovers and selects the U2U relay UE1 and U2N relay UE2 as its U2N relays through a discovery process. Step 91a may be completed before step 91.

Steps 92 and 92a: the remote UE1 establishes an SL unicast connection with the U2U relay UE1, and the U2U relay UE1 establishes an SL unicast connection with the U2N relay UE2. With respect to Step 92a, an SL unicast connection between the U2U relay UE1 and the U2N relay UE2 may be established before the remote UE1 establishes the SL connection with the U2U relay UE1.

Steps 93 and 93a: the remote UE1 transmits its Uu interface identifier information (5G-S-TMSI of the remote UE), the PC5 interface identifier information of the remote UE (Layer-2 ID of the remote UE), RRC state of the remote UE (RRC idle state), paging reception requirement (the remote UE needs the relay UE to perform paging forwarding) to the U2U relay UE1, and the U2U relay UE1 then sends them to the U2N relay UE2.

Step 94: the remote UE1 initiates an RRC setup request to the base station 1 through the U2U relay UE1 and the U2N relay UE2.

Step 95: after receiving the RRC setup request sent by the remote UE1 to the base station, the U2N relay UE2 buffers the message and the message triggers the relay UE2 to initiate a remote UE information report. The remote UE information report contains: Uu interface identifier information of the remote UE1 (5G-S-TMSI of the remote UE1), PC5 interface identifier information of the remote UE1 (Layer-2 ID of the remote UE1), RRC state of the remote UE1 (RRC idle state), paging reception requirement (remote UE1 does not need U2N relay UE2 for paging forwarding), a Uu RRC message is received from the remote UE1, relay connection status (there is a relay connection between the U2N relay UE2 and the remote UE1).

The remote UE information report may be a related RRC message or a newly introduced RRC message.

Step 96: after receiving the remote UE information report sent by the U2N relay UE2, the base station 1 assigns the local U2N relay identifier 1 to the remote UE1, and sends the assigned local U2N relay identifier 1, a correspondence relationship between the local U2N relay identifier 1 and the remote UE1, and the Uu SRB configuration of the remote UE1 to the U2N relay UE2 through signaling. The Uu SRB of the remote UE1 includes but is not limited to: SRB0 and/or SRB1 and/or SRB2 and/or SRB3 and a combination thereof. The Uu SRB configuration of the remote UE1 includes but is not limited to: SDAP configuration, PDCP configuration, adaptation layer configuration, RLC configuration, MAC configuration, logical channel configuration and physical layer configuration.

Step 97: after receiving the message of step 96, the U2N relay UE2 establishes Uu layer entities (including but not limited to SDAP, PDCP, adaptation layer, RLC, and MAC entities) for the remote UE based on the configuration information, and sends the buffered RRC setup request message of the remote UE1 to the base station 1.

Step 98: the base station 1 sends an RRC setup message to the remote UE1 through the U2N relay UE2 and the U2U relay UE1.

Step 99: The remote UE1 sends an RRC setup completion message to the base station 1 through the U2N relay UE2 and the U2U relay UE1.

In the above steps 97 to 99, the U2N relay UE2 performs remote UE channel mapping through the local U2N relay identifier.

### Example 5:

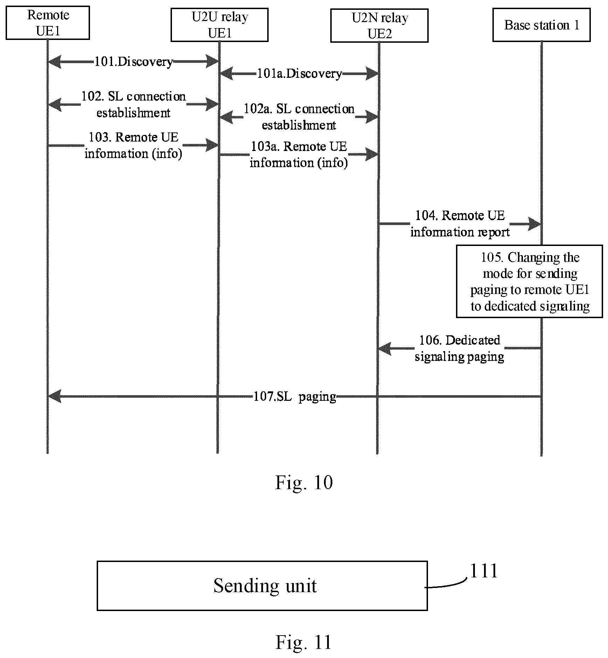

The remote UE1 accesses the base station 1 through the U2U relay UE1 and the U2N relay UE2. The U2N relay UE2 is in the connected state. The activated BWP of the U2N relay UE2 is not configured with a common CORESET. Paging for the remote UE1 is forwarded by the U2N relay UE2. As shown in Fig. 10, this example includes steps 101 to 107.

Steps 101, 101a, 102 and 102a are the same as steps 91, 91a, 92 and 92a in Example 4, respectively.

Step 103: the remote UE1 sends its Uu interface identifier information (5G-S-TMSI of the remote UE), the PC5 interface identifier information of the remote UE (Layer-2 ID of the remote UE), the RRC state of the remote UE (RRC idle), and paging reception requirement (the remote UE needs the relay UE for paging forwarding) to the U2U relay UE1, and the U2U relay UE1 sends the information of the remote UE1 to the U2N relay UE2.

Step 104: after the U2N relay UE2 receives the information of the remote UE1, the information triggers the U2N relay UE2 to initiate a remote UE information report. The remote UE information report contains: the Uu interface identifier information of the remote UE1 (5G-S-TMSI of the remote UE1), PC5 interface identifier information of the remote UE1 (Layer-2 ID of the remote UE1), RRC state of the remote UE1 (RRC idle state), paging reception requirement (the remote UE1 needs the U2N relay UE2 for paging forwarding), the Uu RRC message is not received from the remote UE1, relay connection status (there is a relay connection between the U2N relay UE2 and the remote UE1).

Step 105: after receiving the remote UE information report from the relay UE1, the base station knows that the U2N relay UE2 needs to forward paging for the remote UE1, and the activated BWP of the U2N relay UE2 is not configured with a common CORESET, the base station determines that the mode for sending paging to the remote UE1 is to send the paging to the relay UE1 through dedicated signaling.

Step 106: the base station 1 uses dedicated signaling to send the paging directed to the remote UE1 to the U2N relay UE2.

Step 107: the U2N relay UE2 forwards the paging directed to the remote UE1 to the U2U relay UE1 through SL signaling, and the U2U relay UE1 then sends the paging to the remote UE1.

Various methods of embodiments of the present disclosure have been introduced above. The apparatus for implementing the above methods will be further provided hereinafter.

Referring to Fig. 11, an embodiment of the present disclosure provides a first relay UE, including:
a sending unit 111, configured to send the information of the remote UE to the base station, wherein the remote UE accesses the base station through the first relay UE, and the information of the remote UE includes a Uu interface identifier and/or PC5 interface identifier of the remote UE.

Here, the first relay UE may be a relay UE directly connected to the base station.

Optionally, the information of the remote UE also includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

Optionally, the first relay UE also includes:
a first receiving unit, configured to receive the information of the remote UE through a sidelink between the first relay UE and the remote UE before sending the information of the remote UE to the base station.

Optionally, the information of the remote UE is sent by the remote UE after a sidelink between the remote UE and the first relay UE is established.

Optionally, the first relay UE sends the information of the remote UE to the base station when a precondition is met, where the precondition includes at least one of the following:
a first precondition: the remote UE is in an RRC idle state or inactive state, the first relay UE is in an RRC connected state, and the first relay UE is not configured with the common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

Optionally, the first relay UE also includes:
a buffer unit, configured to buffer the initial Uu RRC message in case that the second precondition is met;
a second receiving unit, configured to receive and save a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station; and/or, to receive Uu interface configuration information of the remote UE that is sent by the base station, and perform configuration of the Uu interface according to the Uu interface configuration information of the remote UE, wherein the Uu interface configuration information includes configuration information of an SRB and/or a DRB.

Optionally, the second receiving unit is also configured to configure an entity corresponding to the Uu interface for the remote UE in at least one of a local adaptation layer, a local RLC layer and a local MAC layer.

Optionally, the first relay UE also includes:
a sending processing unit, configured to add the local relay identifier corresponding to the remote UE to an adaptation layer header of the initial Uu RRC message and send the initial Uu RRC message to the base station.

Optionally, the first relay UE also includes:
a receiving processing unit, configured to: receive a first Uu RRC message sent by the base station; determine, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and send the first Uu RRC message to the first remote UE.

Optionally, the first relay UE also includes:
a link interruption processing unit, configured to, in case that it is detected that a sidelink between the first relay UE and the remote UE is interrupted, send an indication message to the base station that indicates the wireless link between the remote UE and the first relay UE is interrupted.

It should be noted that the device in this embodiment is the device corresponding to the method shown in Fig. 4. The implementations in each of the above embodiments are applicable to the embodiments of the device, and the same technical effect can be achieved. The above-mentioned device provided by the embodiments of the present disclosure can implement all the method steps implemented by the above-mentioned method embodiments, and can achieve the same technical effects. The parts and beneficial effects in this embodiment that are the same as those in the method embodiments will not be detailed here again.

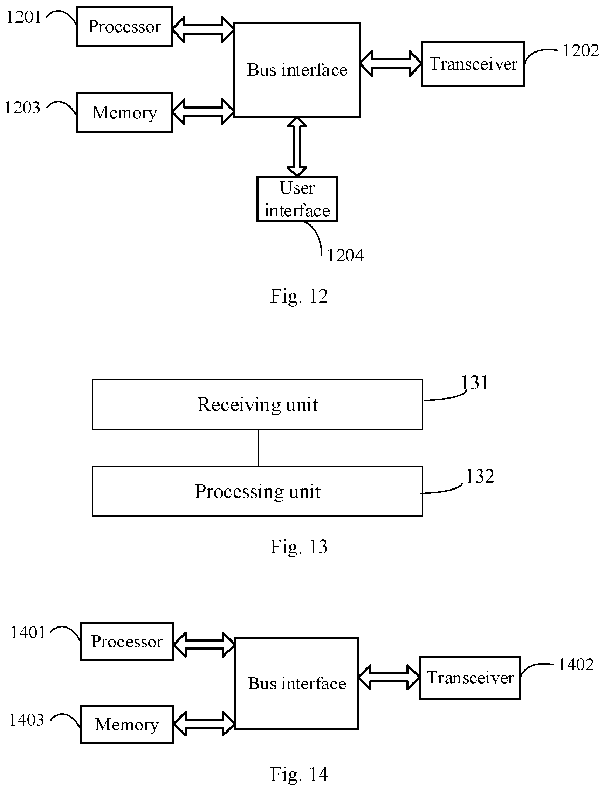

Refer to Fig. 12, which is a schematic structural diagram of an apparatus for sending remote UE information according to an embodiment of the present disclosure. The apparatus is applied to the first relay UE and specifically includes: a processor 1201, a transceiver 1202, a memory 1203, a user interface 1204 and a bus interface.

In an embodiment of the present disclosure, the apparatus further includes a program stored in the memory 1203 and executable by the processor 1201.

The transceiver 1202 is configured to send and receive data under the control of the processor;
the processor 1201 is configured to read the computer program in the memory and perform the following operations:
sending information of a remote UE to a base station, wherein the remote UE accesses the base station through the first relay UE, and the information of the remote UE includes a Uu interface identifier and a PC5 interface identifier of the remote UE.

Here, the first relay UE may be a relay UE directly connected to the base station.

Optionally, the information of the remote UE also includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

Optionally, the processor is also configured to read the computer program in the memory and perform the following operations:
before sending the information of the remote UE to the base station, receiving the information of the remote UE through a sidelink between the first relay UE and the remote UE.

Optionally, the information of the remote UE is sent by the remote UE after a sidelink between the remote UE and the first relay UE is established.

Optionally, the processor is also configured to read the computer program in the memory and perform the following operations:
sending the information of the remote UE to the base station when a precondition is met, wherein the precondition includes at least one of the following:
a first precondition: the remote UE is in an RRC idle state or inactive state, the first relay UE is in an RRC connected state, and the first relay UE is not configured with a common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

Optionally, the processor is also configured to read the computer program in the memory and perform the following operations:
in case that the second precondition is met, buffering the initial Uu RRC message, and after the sending the information of the remote UE to the base station:
receiving and saving a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station;
   and/or,
receiving Uu interface configuration information of the remote UE that is sent by the base station, and performing configuration of the Uu interface according to the Uu interface configuration information of the remote UE, wherein the Uu interface configuration information includes configuration information of an SRB and/or a DRB.

Optionally, the performing configuration of the Uu interface includes:
configuring an entity corresponding to the Uu interface for the remote UE in at least one of a local adaptation layer, a local RLC layer and a local MAC layer.

Optionally, the processor is also configured to read the computer program in the memory and perform the following operations:
adding the local relay identifier corresponding to the remote UE to an adaptation layer header of the initial Uu RRC message and sending the initial Uu RRC message to the base station.

Optionally, the processor is also configured to read the computer program in the memory and perform the following operations:
receiving a first Uu RRC message sent by the base station to the remote UE; determining, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and sending the first Uu RRC message to the first remote UE.

Optionally, the processor is also configured to read the computer program in the memory and perform the following operations:
in case that it is detected that a sidelink between the first relay UE and the remote UE is interrupted, sending an indication message to the base station that indicates the wireless link between the remote UE and the first relay UE is interrupted.

It can be understood that in the embodiment of the present disclosure, when the computer program is executed by the processor 1201, the various processes of the method embodiment shown in FIG. 4 can be implemented, and the same technical effect can be achieved. To avoid repetition, description thereof will not be repeated here.

In Fig. 12, a bus architecture may include any number of interconnected buses and bridges, and connects various circuits including one or more processors represented by the processor 1201 and memory represented by the memory 1203. The bus architecture may also connect various other circuits such as peripherals, voltage regulators and power management circuits, which is well known in the art. Therefore, a detailed description thereof is omitted herein. A bus interface provides an interface. The transceiver 1202 may be plural elements, i.e., including a transmitter and a receiver, to allow for communication with various other apparatuses on the transmission medium. For different use equipment, the user interface 1204 may be an interface capable of externally or internally connecting a required device, and the connected device includes, but is not limited to: a keypad, a display, a speaker, a microphone, a joystick and the like.

The processor 1201 is responsible for managing the bus architecture and general processing, and the memory 1203 can store data used by the processor 1201 when performing operations.

It should be noted that the device in this embodiment is the device corresponding to the method shown in Fig. 4. The implementations in each of the above embodiments are applicable to the embodiments of the device, and the same technical effect can be achieved. In this device, the transceiver 1202 and the memory 1203, as well as the transceiver 1202 and the processor 1201 can be in communication connection through a bus interface. The functions of the processor 1201 can also be realized by the transceiver 1202, and the functions of the transceiver 1202 can also be realized by the processor 1201. It should be noted here that the above-mentioned device provided by the embodiments of the present disclosure can implement all the method steps implemented by the above-mentioned method embodiments, and can achieve the same technical effects. The parts and beneficial effects of this embodiment that are same as those of the method embodiments will not be described in detail.

In some embodiments of the present disclosure, a computer-readable storage medium storing a program is also provided. When the program is executed by a processor, the following steps are implemented:
sending information of a remote UE to a base station, wherein the remote UE accesses the base station through the first relay UE, and the information of the remote UE includes a Uu interface identifier and a PC5 interface identifier of the remote UE.

When the program is executed by the processor, all the implementations in the remote UE information sending method shown in Fig. 4 can be realized, and the same technical effects can be achieved. To avoid repetition, description thereof will not be repeated here.

An embodiment of the present disclosure provides a base station as shown in Fig. 13, including:
a receiving unit 131, configured to receive the information of the remote UE sent by the first relay UE, wherein the remote UE accesses the base station through the first relay UE, and the information of the remote UE includes the Uu interface identifier and PC5 interface identifier of the remote UE;
a processing unit 132, configured to perform at least one of the following processes according to the information of the remote UE:
   assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
   configuring an entity corresponding to the Uu interface of the remote UE, and sending Uu interface configuration information of the remote UE to the first relay UE, wherein the Uu interface configuration information includes configuration information of an SRB and/or a DRB;
   determining a mode for sending paging to the remote UE.

Here, the first relay UE may be a relay UE directly connected to the base station.

Optionally, the information of the remote UE also includes at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

Optionally, the base station also includes:
an interactive processing unit, configured to:
receive a second Uu RRC message of the remote UE that is sent by the first relay UE, determine, according to a second local relay identifier carried in an adaptation layer header of the second Uu RRC message and the first correspondence relationship that is locally saved, a Uu interface identifier of a second remote UE corresponding to the second local relay identifier, and process the second Uu RRC message based on the Uu interface identifier of the second remote UE;
   and/or,
when sending a third Uu RRC message of a third remote UE to the first relay UE, determine a local relay identifier corresponding to the third remote UE according to the first correspondence relationship that is locally saved, add the local relay identifier corresponding to the third remote UE to an adaptation layer header of the third Uu RRC message, and then send the third Uu RRC message to the first relay UE.

Optionally, the mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

Optionally, the processing unit is also configured to determine the mode for sending paging to the remote UE in at least one of the following ways:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the first and second sending modes are used simultaneously;
in case that the common CORESET and/or the common search space is configured on the activated BWP of the first relay UE, determining that the mode for sending paging to the remote UE is the first sending mode.

Optionally, the base station also includes:
a link interruption processing unit, configured to receive indication information sent by the first relay UE for indicating that a wireless link between a fourth remote UE and the first relay UE is interrupted; according to the indication information, release relevant configuration of the fourth remote UE, delete a local relay identifier assigned to the fourth remote UE, delete a second correspondence relationship between a Uu interface identifier of the fourth remote UE and the local relay identifier, and determine a mode for sending paging to the fourth remote UE based on received information of the fourth remote UE reported by each relay UE.

It should be noted that the apparatus in this embodiment is the device corresponding to the method shown in Fig. 5. The implementations in each of the above embodiments are applicable to the embodiments of the device, and the same technical effects can be achieved. It should be noted here that the above-mentioned device provided by the embodiments of the present disclosure can implement all the method steps implemented by the above-mentioned method embodiments, and can achieve the same technical effects. The parts and beneficial effects of this embodiment that are same as those of the method embodiments will not be described in detail.

Refer to Fig. 14, which is a schematic structural diagram of an apparatus for receiving remote UE information according to an embodiment of the present disclosure. The apparatus is applied to a base station and specifically includes: a processor 1401, a transceiver 1402, a memory 1403 and a bus interface.

In an embodiment of the present disclosure, the apparatus further includes: a program stored in the memory 1403 and executable by the processor 1401,
the transceiver 1402 is configured to send and receive data under the control of the processor;
the processor 1401 is configured to read the computer program in the memory and perform the following operations:
   receiving information of a remote UE that is sent by a first relay UE, wherein the remote UE accesses the base station through the first relay UE, and the information of the remote UE includes a Uu interface identifier and a PC5 interface identifier of the remote UE; and
   performing at least one of following processes based on the information of the remote UE:
      assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
      configuring an entity corresponding to the Uu interface of the remote UE, and sending Uu interface configuration information of the remote UE to the first relay UE, wherein the Uu interface configuration information includes configuration information of an SRB and/or a DRB;
      determining a mode for sending paging to the remote UE.

Here, the first relay UE may be a relay UE directly connected to the base station.

Optionally, the information of the remote UE also includes at least one of following information:
a radio resource control (RRC) state of the remote UE ;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

Optionally, the processor is also configured to read the computer program in the memory and perform the following operations:
receiving a second Uu RRC message of the remote UE that is sent by the first relay UE, determining, according to a second local relay identifier carried in an adaptation layer header of the second Uu RRC message and the first correspondence relationship that is locally saved, a Uu interface identifier of a second remote UE corresponding to the second local relay identifier, and processing the second Uu RRC message based on the Uu interface identifier of the second remote UE,
   and/or,
when sending a third Uu RRC message of a third remote UE to the first relay UE, determining a local relay identifier corresponding to the third remote UE according to the first correspondence relationship that is locally saved, adding the local relay identifier corresponding to the third remote UE to an adaptation layer header of the third Uu RRC message, and then sending the third Uu RRC message to the first relay UE.

Optionally, the mode for sending paging includes one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE;
a third sending mode: using the first sending mode and the second sending mode simultaneously.

Optionally, the determining the mode for sending paging to the remote UE includes at least one of the following:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the third sending mode;
in case that the common CORESET and/or the common search space is configured on the activated BWP of the first relay UE, determining that the mode for sending paging to the remote UE is the first sending mode.

Optionally, the processor is also configured to read the computer program in the memory and perform the following operations:
receiving indication information sent by the first relay UE for indicating that a wireless link between a fourth remote UE and the first relay UE is interrupted;
according to the indication information, releasing relevant configuration of the fourth remote UE, deleting a local relay identifier assigned to the fourth remote UE, deleting a second correspondence relationship between a Uu interface identifier of the fourth remote UE and the local relay identifier, and determining a mode for sending paging to the fourth remote UE based on received information of the fourth remote UE reported by each relay UE.

It can be understood that in the embodiment of the present disclosure, when the computer program is executed by the processor 1401, each process of the method embodiment shown in FIG. 5 can be implemented, and the same technical effect can be achieved. To avoid repetition, description thereof will not be repeated here.

In Fig. 14, a bus architecture may include any number of interconnected buses and bridges, and connects various circuits including one or more processors represented by the processor 1401 and memory represented by the memory 1403. The bus architecture may also connect various other circuits such as peripherals, voltage regulators and power management circuits, which is well known in the art. Therefore, a detailed description thereof is omitted herein. A bus interface provides an interface. The transceiver 1402 may be plural elements, i.e., including a transmitter and a receiver, to allow for communication with various other apparatuses on the transmission medium.

The processor 1401 is responsible for managing the bus architecture and general processing, and the memory 1403 can store data used by the processor 1401 when performing operations.

It should be noted that the UE in this embodiment is a device corresponding to the method shown in Fig. 5. The implementations in the above embodiments are applicable to the embodiment of the UE, and the same technical effect can be achieved. In this device, the transceiver 1402 and the memory 1403, as well as the transceiver 1402 and the processor 1401 can be in communication connection through a bus interface. The functions of the processor 1401 can also be realized by the transceiver 1402, and the functions of the transceiver 1402 can also be realized by the processor 1401. It should be noted here that the above-mentioned device provided by the embodiments of the present disclosure can implement all the method steps implemented by the above-mentioned method embodiments, and can achieve the same technical effects. The parts and beneficial effects of this embodiment that are same as those of the method embodiments will not be described in detail.

In some embodiments of the present disclosure, a computer-readable storage medium storing a program is also provided. When the program is executed by a processor, the following steps are implemented:
receiving information of a remote UE that is sent by a first relay UE, wherein the remote UE accesses the base station through the first relay UE, and the information of the remote UE includes a Uu interface identifier and a PC5 interface identifier of the remote UE; and
performing at least one of following processes based on the information of the remote UE:
   assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
   configuring an entity corresponding to the Uu interface of the remote UE, and sending Uu interface configuration information of the remote UE to the first relay UE, wherein the Uu interface configuration information includes configuration information of an SRB and/or a DRB;
   determining a mode for sending paging to the remote UE.

When the program is executed by the processor, all the above implementations of the remote UE information receiving method applied to the base station can be realized, and the same technical effects can be achieved. To avoid repetition, description thereof will not be repeated here.

A person skilled in the art may be aware that, the exemplary units and algorithm steps described in connection with the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or other forms.

The units described as separate parts may or may not be physically separate, and parts displayed as units may or may not be physical units, that is, may be located in one position, or may be distributed on a plurality of network units. Apart or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

If the functions are implemented in a form of software functional unit and sold or used as an independent product, the functions may be stored in a computer-readable storage medium. Based on such an understanding, essential parts, or parts contributing to the related art, of the technical solution of the present disclosure may be implemented in a form of a software product. The computer software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a universal serial bus (USB) flash drive, a removable hard disk, a read-only memory (ROM), a random access memory (RAM), a magnetic disk, or an optical disc.

It should be noted that it should be understood that the division of each module above is only a division of logical functions. In actual implementation, it can be fully or partially integrated into a physical entity, or it can also be physically separated. These modules can all be implemented in the form of software called by a processing component; they can also all be implemented in the form of hardware; some modules can also be implemented in the form of software called by a processing component, and some modules can be implemented in the form of hardware. For example, the determination module can be a separate processing element, or can be integrated into a chip of the above apparatus. In addition, it can also be stored in the memory of the above apparatus in the form of program code, and can be called by a certain processing element of the above apparatus to execute the functions of the above identified modules. The implementation of other modules is similar. In addition, all or part of these modules can be integrated together or implemented independently. The processing element described here may be an integrated circuit with signal processing capabilities. During the implementation process, each step of the above method or each of the above modules can be completed by integrated logic circuits in the form of hardware or instructions in the form of software in the processor element.

For example, each module, unit, sub-unit or sub-module may be one or more integrated circuits configured to implement the above method, e.g., one or more application specific integrated circuits (ASICs), or one or more microprocessors (digital signal processor, DSP), or one or more field programmable gate arrays (FPGAs), etc. For another example, when one of the above modules is implemented by a processing element scheduling program codes, the processing element can be a general-purpose processor, such as a central processing unit (CPU) or other processors that can call the program code. For another example, these modules can be integrated together and implemented in the form of a system-on-a-chip (SOC).

The terms "first", "second", etc. in the description and claims of the present disclosure are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions. For example, a process, method, system, product or equipment including a series of steps or units is not limited to those steps or units which are clearly listed, but may include other steps or units which are not clearly listed or intrinsic to the process, the method, the product or the equipment. In addition, the use of "and/or" in the description and claims represents at least one of the connected objects, e.g., A and/or B and/or C indicates the inclusion of 7 situations, namely, A alone, B alone, C alone, both A and B, both B and C, both A and C, and A, B and C all exist. Similarly, the use of "at least one of A and B" in this specification and in the claims should be understood to mean "A alone, B alone, or both A and B present."

The aforementioned are merely specific implementations of the present disclosure, but the scope of the disclosure is by no means limited thereto. Any modifications or replacements that would easily occur to those skilled in the art, without departing from the technical scope disclosed in the disclosure, should be encompassed in the scope of the present disclosure. Therefore, the scope of the present disclosure is to be determined by the scope of the claims.

## Claims

1. A method for sending remote user equipment (UE) information, comprising:
sending, by a first relay UE, information of a remote UE to a base station, wherein the remote UE accesses the base station through the first relay UE, and the information of the remote UE comprises a user to network (Uu) interface identifier and/or a sidelink communication (PC5) interface identifier of the remote UE.

2. The method according to claim 1, wherein the information of the remote UE further comprises at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

3. The method according to claim 1 or 2, wherein before the sending the information of the remote UE to the base station, the method further comprises:
receiving, by the first relay UE, the information of the remote UE through a sidelink between the first relay UE and the remote UE.

4. The method according to claim 3, wherein the first relay UE sends the information of the remote UE to the base station when a precondition is met, and the precondition comprises at least one of the following:
a first precondition: the remote UE is in an RRC idle state or inactive state, the first relay UE is in an RRC connected state, and the first relay UE is not configured with a common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

5. The method according to claim 4, wherein, in case that the second precondition is met, the first relay UE buffers the initial Uu RRC message, and after the sending the information of the remote UE to the base station, the method further comprises:
receiving and saving, by the first relay UE, a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station;
and/or,
receiving, by the first relay UE, Uu interface configuration information of the remote UE that is sent by the base station, and performing, by the first relay UE, configuration of the Uu interface according to the Uu interface configuration information of the remote UE, wherein the Uu interface configuration information comprises configuration information of a signaling radio bearer (SRB) and/or a data radio bearer (DRB).

6. The method according to claim 5, wherein the performing configuration of the Uu interface comprises:
configuring an entity corresponding to the Uu interface for the remote UE in at least one of a local adaptation layer, a local radio link control (RLC) layer and a local medium access control (MAC) layer.

7. The method according to claim 5, further comprising:
adding, by the first relay UE, the local relay identifier corresponding to the remote UE to an adaptation layer header of the initial Uu RRC message and sending, by the first relay UE, the initial Uu RRC message to the base station.

8. The method according to claim 7, further comprising:
receiving, by the first relay UE, a first Uu RRC message sent by the base station;
determining, by the first relay UE, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and
sending, by the first relay UE, the first Uu RRC message to the first remote UE.

9. The method according to claim 6, further comprising:
in case that the first relay UE detects that a sidelink between the first relay UE and the remote UE is interrupted, sending, by the first relay UE, an indication message to the base station that indicates the wireless link between the remote UE and the first relay UE is interrupted.

10. A method for receiving remote user equipment (UE) information, comprising:
receiving, by a base station, information of a remote UE that is sent by a first relay UE, wherein the remote UE accesses the base station through the first relay UE, and the information of the remote UE comprises a Uu interface identifier and a PC5 interface identifier of the remote UE; and
performing, by the base station, at least one of following processes based on the information of the remote UE:
assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
configuring an entity corresponding to the Uu interface of the remote UE, and sending Uu interface configuration information of the remote UE to the first relay UE, wherein the Uu interface configuration information comprises configuration information of an SRB and/or a DRB;
determining a mode for sending paging to the remote UE.

11. The method according to claim 10, wherein the information of the remote UE further comprises at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

12. The method according to claim 10, further comprising:
receiving, by the base station, a second Uu RRC message of the remote UE that is sent by the first relay UE, determining, by the base station, according to a second local relay identifier carried in an adaptation layer header of the second Uu RRC message and the first correspondence relationship that is locally saved, a Uu interface identifier of a second remote UE corresponding to the second local relay identifier, and processing, by the base station, the second Uu RRC message based on the Uu interface identifier of the second remote UE;
and/or,
when the base station sends a third Uu RRC message of a third remote UE to the first relay UE, determining, by the base station, a local relay identifier corresponding to the third remote UE according to the first correspondence relationship that is locally saved, adding, by the base station, the local relay identifier corresponding to the third remote UE to an adaptation layer header of the third Uu RRC message, and then sending, by the base station, the third Uu RRC message to the first relay UE.

13. The method according to claim 10, wherein the mode for sending paging comprises one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

14. The method according to claim 13, wherein the determining the mode for sending paging to the remote UE comprises at least one of the following:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the first and second sending modes are used simultaneously;
in case that the common CORESET and/or the common search space is configured on the activated BWP of the first relay UE, determining that the mode for sending paging to the remote UE is the first sending mode.

15. The method according to claim 10, further comprising:
receiving, by the base station, indication information sent by the first relay UE for indicating that a wireless link between a fourth remote UE and the first relay UE is interrupted;
according to the indication information, releasing, by the base station, relevant configuration of the fourth remote UE, deleting, by the base station, a local relay identifier assigned to the fourth remote UE, deleting, by the base station, a second correspondence relationship between a Uu interface identifier of the fourth remote UE and the local relay identifier, and determining, by the base station, a mode for sending paging to the fourth remote UE based on received information of the fourth remote UE reported by each relay UE.

16. An apparatus for sending remote user equipment (UE) information, applied to a first relay UE, comprising a memory, a transceiver and a processor, wherein,
the memory is configured to store a computer program;
the transceiver is configured to send and receive data under the control of the processor;
the processor is configured to read the computer program in the memory and perform the following operations:
sending information of a remote UE to a base station, wherein the remote UE accesses the base station through the first relay UE, and the information of the remote UE comprises a Uu interface identifier and a PC5 interface identifier of the remote UE.

17. The apparatus according to claim 16, wherein the information of the remote UE further comprises at least one of following information:
a radio resource control (RRC) state of the remote UE ;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

18. The apparatus according to claim 16 or 17, wherein the processor is further configured to read the computer program in the memory and perform the following operations:
before sending the information of the remote UE to the base station, receiving the information of the remote UE through a sidelink between the first relay UE and the remote UE.

19. The apparatus according to claim 18, wherein the processor is further configured to read the computer program in the memory and perform the following operations:
sending the information of the remote UE to the base station when a precondition is met, wherein the precondition comprises at least one of the following:
a first precondition: the remote UE is in an RRC idle state or inactive state, the first relay UE is in an RRC connected state, and the first relay UE is not configured with a common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

20. The apparatus according to claim 19, wherein the processor is further configured to read the computer program in the memory and perform the following operations:
in case that the second precondition is met, buffering the initial Uu RRC message, and after the sending the information of the remote UE to the base station:
receiving and saving a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station;
and/or,
receiving Uu interface configuration information of the remote UE that is sent by the base station, and performing configuration of the Uu interface according to the Uu interface configuration information of the remote UE, wherein the Uu interface configuration information comprises configuration information of an SRB and/or a DRB.

21. The apparatus according to claim 20, wherein the performing configuration of the Uu interface comprises:
configuring an entity corresponding to the Uu interface for the remote UE in at least one of a local adaptation layer, a local RLC layer and a local MAC layer.

22. The apparatus according to claim 20, wherein the processor is further configured to read the computer program in the memory and perform the following operations:
adding the local relay identifier corresponding to the remote UE to an adaptation layer header of the initial Uu RRC message and sending the initial Uu RRC message to the base station.

23. The apparatus according to claim 22, wherein the processor is further configured to read the computer program in the memory and perform the following operations:
receiving a first Uu RRC message sent by the base station to the remote UE; determining, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and sending the first Uu RRC message to the first remote UE.

24. The apparatus according to claim 21, wherein the processor is further configured to read the computer program in the memory and perform the following operations:
in case that it is detected that a sidelink between the first relay UE and the remote UE is interrupted, sending an indication message to the base station that indicates the wireless link between the remote UE and the first relay UE is interrupted.

25. A first relay user equipment (UE), comprising:
a sending unit, configured to send information of a remote UE to a base station, wherein the remote UE accesses the base station through the first relay UE, and the information of the remote UE comprises a Uu interface identifier and/or a PC5 interface identifier of the remote UE.

26. The first relay UE according to claim 25, wherein the information of the remote UE further comprises at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

27. The first relay UE according to claim 25 or 26, further comprising:
a first receiving unit, configured for the first relay UE to receive the information of the remote UE through a sidelink between the first relay UE and the remote UE.

28. The first relay UE according to claim 27, wherein the first relay UE sends the information of the remote UE to the base station when a precondition is met, wherein the precondition comprises at least one of the following:
a first precondition: the remote UE is in an RRC idle state or inactive state, the first relay UE is in an RRC connected state, and the first relay UE is not configured with a common control resource set (CORESET) and/or common search space;
a second precondition: the first relay UE receives an initial Uu RRC message sent by the remote UE via the sidelink;
a third precondition: the first relay UE detects that a sidelink between the first relay UE and the remote UE is interrupted.

29. The first relay UE according to claim 28, further comprising:
a buffer unit, configured to buffer the initial Uu RRC message in case that the second precondition is met;
a second receiving unit, configured for the first relay UE to receive and save a correspondence relationship between the PC5 interface identifier of the remote UE and a local relay identifier that is sent by the base station, wherein the local relay identifier is identification information assigned by the base station for identifying the remote UE on a Uu interface between the first relay UE and the base station; and/or, for the first relay UE to receive Uu interface configuration information of the remote UE that is sent by the base station, and perform configuration of the Uu interface according to the Uu interface configuration information of the remote UE, wherein the Uu interface configuration information comprises configuration information of an SRB and/or a DRB.

30. The first relay UE according to claim 29, wherein the second receiving unit is further configured to configure an entity corresponding to the Uu interface for the remote UE in at least one of a local adaptation layer, a local RLC layer and a local MAC layer.

31. The first relay UE according to claim 29, further comprising:
a sending processing unit, configured to add the local relay identifier corresponding to the remote UE to an adaptation layer header of the initial Uu RRC message and send the initial Uu RRC message to the base station.

32. The first relay UE according to claim 31, further comprising:
a receiving processing unit, configured to receive a first Uu RRC message sent by the base station; determine, according to the locally saved correspondence relationship between the PC5 interface identifier of the remote UE and the local relay identifier and a first local relay identifier carried in an adaptation layer header of the first Uu RRC message, a first remote UE corresponding to the first local relay identifier; and send the first Uu RRC message to the first remote UE.

33. The first relay UE according to claim 30, further comprising:
a link interruption processing unit, configured to, in case that it is detected that a sidelink between the first relay UE and the remote UE is interrupted, send an indication message to the base station that indicates the wireless link between the remote UE and the first relay UE is interrupted.

34. An apparatus for receiving remote user equipment (UE) information, applied to a base station, wherein the device comprises a memory, a transceiver and a processor, wherein,
the memory is configured to store a computer program;
the transceiver is configured to send and receive data under the control of the processor;
the processor is configured to read the computer program in the memory and perform the following operations:
receiving information of a remote UE that is sent by a first relay UE, wherein the remote UE accesses the base station through the first relay UE, and the information of the remote UE comprises a Uu interface identifier and a PC5 interface identifier of the remote UE; and
performing at least one of following processes based on the information of the remote UE:
assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
configuring an entity corresponding to the Uu interface of the remote UE, and sending Uu interface configuration information of the remote UE to the first relay UE, wherein the Uu interface configuration information comprises configuration information of an SRB and/or a DRB;
determining a mode for sending paging to the remote UE.

35. The apparatus according to claim 34, wherein the information of the remote UE further comprises at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

36. The apparatus according to claim 34, wherein the processor is further configured to read the computer program in the memory and perform the following operations:
receiving a second Uu RRC message of the remote UE that is sent by the first relay UE, determining, according to a second local relay identifier carried in an adaptation layer header of the second Uu RRC message and the first correspondence relationship that is locally saved, a Uu interface identifier of a second remote UE corresponding to the second local relay identifier, and processing the second Uu RRC message based on the Uu interface identifier of the second remote UE;
and/or,
when sending a third Uu RRC message of a third remote UE to the first relay UE, determining a local relay identifier corresponding to the third remote UE according to the first correspondence relationship that is locally saved, adding the local relay identifier corresponding to the third remote UE to an adaptation layer header of the third Uu RRC message, and then sending the third Uu RRC message to the first relay UE.

37. The apparatus according to claim 34, wherein the mode for sending paging comprises one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE;
a third sending mode: using the first sending mode and the second sending mode simultaneously.

38. The apparatus according to claim 37, wherein the determining the mode for sending paging to the remote UE comprises at least one of the following:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the third sending mode;
in case that the common CORESET and/or the common search space is configured on the activated BWP of the first relay UE, determining that the mode for sending paging to the remote UE is the first sending mode.

39. The apparatus according to claim 34, wherein the processor is further configured to read the computer program in the memory and perform the following operations:
receiving indication information sent by the first relay UE for indicating that a wireless link between a fourth remote UE and the first relay UE is interrupted;
according to the indication information, releasing relevant configuration of the fourth remote UE, deleting a local relay identifier assigned to the fourth remote UE, deleting a second correspondence relationship between a Uu interface identifier of the fourth remote UE and the local relay identifier, and determining a mode for sending paging to the fourth remote UE based on received information of the fourth remote UE reported by each relay UE.

40. A base station, comprising:
a receiving unit, configured to receive information of a remote user equipment (UE) that is sent by a first relay UE, wherein the remote UE accesses the base station through the first relay UE, and the information of the remote UE comprises a Uu interface identifier and a PC5 interface identifier of the remote UE;
a processing unit, configured to perform at least one of following processes based on the information of the remote UE:
assigning a local relay identifier used for identifying the remote UE on a Uu interface between the first relay UE and the base station, determining a first correspondence relationship between the Uu interface identifier and the PC5 interface identifier of the remote UE and the local relay identifier, and sending a second correspondence relationship between the PC5 interface identifier of the remote UE and the local relay identifier to the first relay UE;
configuring an entity corresponding to the Uu interface of the remote UE, and sending Uu interface configuration information of the remote UE to the first relay UE, wherein the Uu interface configuration information comprises configuration information of an SRB and/or a DRB;
determining a mode for sending paging to the remote UE.

41. The base station according to claim 40, wherein the information of the remote UE further comprises at least one of following information:
a radio resource control (RRC) state of the remote UE;
paging reception requirement information of the remote UE, wherein the paging reception requirement information is used for indicating whether a relay UE is required to perform paging forwarding;
whether the first relay UE receives a Uu RRC message from the remote UE;
a connection status of a sidelink of the remote UE.

42. The base station according to claim 40, further comprising:
an interactive processing unit, configured to:
receive a second Uu RRC message of the remote UE that is sent by the first relay UE, determine, according to a second local relay identifier carried in an adaptation layer header of the second Uu RRC message and the first correspondence relationship that is locally saved, a Uu interface identifier of a second remote UE corresponding to the second local relay identifier, and process the second Uu RRC message based on the Uu interface identifier of the second remote UE;
and/or,
when sending a third Uu RRC message of a third remote UE to the first relay UE, determine a local relay identifier corresponding to the third remote UE according to the first correspondence relationship that is locally saved, add the local relay identifier corresponding to the third remote UE to an adaptation layer header of the third Uu RRC message, and then send the third Uu RRC message to the first relay UE.

43. The base station according to claim 40, wherein the mode for sending paging comprises one or more of the following modes:
a first sending mode: the base station sends a paging message directed to the remote UE through a paging channel at a paging occasion of the remote UE;
a second sending mode: the base station sends the paging message directed to the remote UE to the relay UE through dedicated signaling, and the relay UE forwards the paging message to the remote UE.

44. The base station according to claim 43, wherein the processing unit is further configured to determine the mode for sending paging to the remote UE in at least one of the following ways:
in case that the information of the remote UE indicates that a sidelink of the remote UE is interrupted and the information of the remote UE sent by a relay UE other than the first relay UE is not received, determining that the mode for sending paging to the remote UE is the first sending mode;
in case that a common CORESET and/or a common search space is not configured on an activated BWP of the first relay UE, determining that the mode for sending paging to the remote UE is the second sending mode or the first and second sending modes are used simultaneously;
in case that the common CORESET and/or the common search space is configured on the activated BWP of the first relay UE, determining that the mode for sending paging to the remote UE is the first sending mode.

45. The base station according to claim 40, further comprising:
a link interruption processing unit, configured to receive indication information sent by the first relay UE for indicating that a wireless link between a fourth remote UE and the first relay UE is interrupted; according to the indication information, release relevant configuration of the fourth remote UE, delete a local relay identifier assigned to the fourth remote UE, delete a second correspondence relationship between a Uu interface identifier of the fourth remote UE and the local relay identifier, and determine a mode for sending paging to the fourth remote UE based on received information of the fourth remote UE reported by each relay UE.

46. A processor-readable storage medium storing a computer program, wherein the computer program is configured to cause a processor to execute the method according to any one of claims 1 to 9, or is configured to cause the processor to execute the method according to any one of claims 10 to 15.
